Europäisches Patentamt

European Patent Office

Office européen des brevets

(19)

(11) Numéro de publication: **0 043 764**
**B1**

(12) **FASCICULE DE BREVET EUROPEEN**

(45) Date de publication du fascicule du brevet: **02.05.85**

(51) Int. Cl.⁴: **F 02 K 1/72**

(21) Numéro de dépôt: **81401059.1**

(22) Date de dépôt: **01.07.81**

(54) **Inverseur de poussée pour moteur à réaction, destiné notamment à équiper un aéronef.**

(30) Priorité: **04.07.80 FR 8014907**

(43) Date de publication de la demande:
**13.01.82 Bulletin 82/02**

(45) Mention de la délivrance du brevet:
**02.05.85 Bulletin 85/18**

(84) Etats contractants désignés:
**DE GB NL**

(56) Documents cités:
**FR-A-1 482 538**
**FR-A-2 121 563**
**FR-A-2 354 453**
**GB-A- 812 167**
**GB-A-1 177 864**
**US-A-3 036 431**
**US-A-3 280 562**
**US-A-3 605 411**
**US-A-3 612 401**
**US-A-3 815 357**

(73) Titulaire: **SOCIETE DE CONSTRUCTION DES AVIONS HUREL-DUBOIS**
**39 rue Grange Dame-Rose**
**F-92360 Meudon-la-Foret (FR)**

(72) Inventeur: **Kennedy, John**
**6, Square du Pont de Sèvres**
**F-92100 Boulogne (FR)**
Inventeur: **Fournier, Alain**
**34, rue Pierre Corby**
**F-92140 Clamart (FR)**

(74) Mandataire: **Picard, Jean-Claude Georges et al**
**Cabinet Plasseraud 84, rue d'Amsterdam**
**F-75009 Paris (FR)**

Courier Press, Leamington Spa, England.

EP 0 043 764 B1

## Description

La présente invention concerne un inverseur de poussée pour moteur à réaction à capotage extérieur entourant une structure de moteur et délimitant avec celle-ci un canal annulaire pour l'écoulement d'un flux gazeux depuis une région amont vers une région aval, l'inversion de poussée étant produite par des portes susceptibles de basculer d'une position inactive à une position inclinée d'inversion de poussée dans laquelle elles s'étendent transversalement au canal annulaire qu'elles obturent, tout en libérant un passage dans le capotage, permettant au flux d'être dévié radialement vers l'extérieur du canal annulaire et vers l'amont, ces portes étant attelées par des bielles extérieures à une section aval de capotage qui est susceptible de se déplacer, sous l'action d'organes de commande, axialement par rapport à la structure du moteur.

Le brevet des Etats-Unis THEITS n° 3 280 562 décrit déjà un inverseur de poussée de ce type. Cependant, la structure d'inverseur décrite dans ce document est relativement compliquée, et son concept général entraîne la présence de certains défauts.

Notamment, les portes constituent une structure qui se surajoute à celle du capotage extérieur du moteur; en position inactive, elles se situent à l'intérieur de ce capotage, d'où résulte une complication et une augmentation du poids.

Chez THEITS, en outre, la cinématique de ces portes est compliquée. En effet, elles ne sont pas uniquement pivotantes, mais sont montées sur des poutres solidaires de la structure fixe par l'intermédiaire d'un système de galets qui leur impose non seulement de pivoter, mais également et préalablement de reculer lors de l'actionnement des vérins de manoeuvre commandant la position d'inversion de poussée.

De plus, les organes de commande des portes, à savoir les vérins, n'agissent pas directement sur la section aval mobile du capotage; ils provoquent le recul de celle-ci seulement par l'intermédiaire des portes elles-mêmes et des bielles, ce qui soumet les bielles à des efforts de flexion; de ce fait, les portes elles-mêmes sont soumises aux efforts des vérins. En outre, on remarque que, chez THEITS, les vérins sont montés entre la structure fixe et une zone centrale des portes, ce qui contribue aussi à soumettre celles-ci à des efforts risquant de les déformer et place les vérins dans le flux chaud d'inversion de poussée, ce qui constitue un inconvénient majeur du système.

Le but de la présente invention est d'obtenir un inverseur de poussée du type général de celui mentionné au début, mais qui ne présente pas les inconvénients précités.

A cet effet, un inverseur de poussée du type en question sera, conformément à la présente invention, essentiellement caractérisé en ce que lesdites portes constituent des éléments d'une section intermédiaire du capotage située entre une section fixe amont et la section aval mobile de celui-ci, et, en position inactive, se trouvent dans l'alignement de ces sections amont et aval; en ce que ces portes sont montées pivotantes chacune sur un axe fixe solidaire de la section fixe amont; et en ce que lesdits organes de commande s'étendent directement entre ladite section fixe amont et la section mobile aval, latéralement par rapport auxdites portes, de sorte, d'une part que leur actionnement provoque un recul de ladite section mobile et, consécutivement, un basculement des portes en position d'inversion de poussée, seulement par l'intermédiaire d'une traction exercée par ladite section mobile sur lesdites bielles, et d'autre part qu'ils se trouvent en dehors du flux d'inversion de poussée.

Le fait que les portes constituent une partie du capotage permet l'obtention d'une simplification considérable et d'un allègement, puisqu'elles ont de la sorte un rôle qui est double. Le fait qu'elles soient montées sur des axes solidaires de la section fixe amont permet de simplifier aussi leur cinématique, puisque alors elles ne seront plus soumises qu'à des mouvements de pivotement.

Enfin, et surtout, le fait que les organes de commande (les vérins) s'étendent directement entre la section fixe amont et la section mobile aval, latéralement par rapport aux portes, permet d'obtenir les deux importants résultats suivants: l'actionnement des vérins provoque un recul de la section mobile du capotage et consécutivement un basculement des portes en position d'inversion de poussée seulement par l'intermédiaire d'une traction exercée par la section mobile sur les bielles, et, en outre, les vérins se trouvent en dehors du flux chaud d'inversion de poussée.

Selon une autre caractéristique importante de la présente invention, il peut également être prévu que chaque porte s'étend de part et d'autre de son articulation à des poutres solidaires de la section amont et recevant lesdits organes de commande.

De préférence, en outre, chaque bielle de porte est articulée d'une part au bord amont de la section mobile aval et d'autre part à la porte correspondante en une zone située entre le bord amont de la porte et la zone d'articulation de la porte aux poutres porteuses.

Par ailleurs, chacune des portes est située entre deux poutres voisines et elle est articulée à chacune de ces portes par un pivot d'articulation latéral; en outre, chaque porte est équipée d'une seule bielle d'actionnement qui est placée entre les pivots d'articulation de la porte.

La structure d'inverseur proposée ci-dessus peut notamment être adaptée au cas d'un moteur d'avion en configuration "nacelle latérale" dans laquelle le moteur est fixé par un mât à la structure porteuse.

Selon une forme de réalisation préférée de l'invention, dans un tel cas, l'inverseur sera constitué par trois portes dont l'une est à peu près diamétralement opposée au mât et les deux autres sont situées à peu près symétriquement par rapport à un plan horizontal passant par l'axe du moteur.

Le jet inversé est, de ce fait, éclaté en trois nappes par l'intermédiaire des trois portes, cette solution présentant des avantages en ce qui concerne les interactions avec le sol et les organes de contrôle de l'avion. En effet, seulement un tiers du débit environ sera défléchi vers le sol, un tiers vers le haut, le tiers restant étant réfléchi vers l'extérieur, ce qui diminue d'autant les problèmes d'interaction du flux dévié avec le sol ou avec les organes de contrôle de l'avion.

Les portes sont portées par quatre poutres qui peuvent former chacune une partie de la paroi du capotage.

Afin de permettre l'obturation du canal annulaire en position d'inversion, la partie arrière de chaque porte présente, en plan, une configuration concave avec, au voisinage des pivots d'articulation de la porte, deux cornes latérales s'étendant vers l'arrière et une partie médiane rétrécie, l'arête arrière curviligne de la porte épousant la forme du corps central du moteur lorsque la porte est en position d'inversion. De préférence, l'arête avant de la section mobile aval présentera une configuration correspondant à la configuration des arêtes arrière curvilignes des portes, de telle sorte qu'en position de portes escamotées, lesdites arêtes arrière des portes s'emboîtent dans l'arête avant de la section mobile, en coopérant ainsi à l'action des vérins assurant le maintien des portes en position fermée.

Selon un aspect particulier de l'invention, la structure d'inverseur décrite ci-dessus peut trouver une application avantageuse dans le cas de moteurs dans lesquels sont produits un écoulement de flux primaire (chaud) et un écoulement de flux secondaire (froid) grâce à une soufflante (ou fan) frontal, ces deux flux étant éjectés par le canal annulaire unique réservé entre le corps central et le capotage, l'inverseur de l'invention assure dans ce cas pratiquement la dérivation de la totalité des écoulements créés par le moteur et la soufflante. La simplicité et la robustesse de l'inverseur de l'invention sont particulièrement adaptées à un tel cas car aucun organe fragile (vérin de commande ou pivot d'articulation) ne se trouve au contact du flux dérivé qui est à une température élevée.

D'autres caractéristiques et avantages de la présente invention apparaîtront dans la description qui suit d'un exemple de réalisation de l'inverseur en référence aux dessins annexés dans lesquels:

— la figure 1 est une vue en élévation schématique d'un moteur équipé d'un inverseur selon l'invention représenté en position escamotée;

— la figure 2 est une vue similaire à la figure 1 représentant l'inverseur en position déployée;

— la figure 3 est une coupe transversale schématique selon la ligne III—III de la figure 2;

— la figure 4 est un détail en coupe longitudinale d'une porte représentée en position escamotée en trait continu et en position déployée en traits interrompus; et

— la figure 5 est un schéma d'un moteur à configuration "nacelle latérale" monté sur un fuselage d'avion et montrant la manière dont le flux est distribué en position d'inversion de poussée.

Bien que l'invention puisse s'appliquer à différents types de moteur, dans sa description qui suit, on décrira à titre d'exemple non limitatif, un inverseur équipant un moteur d'avion à double flux en configuration "nacelle latérale".

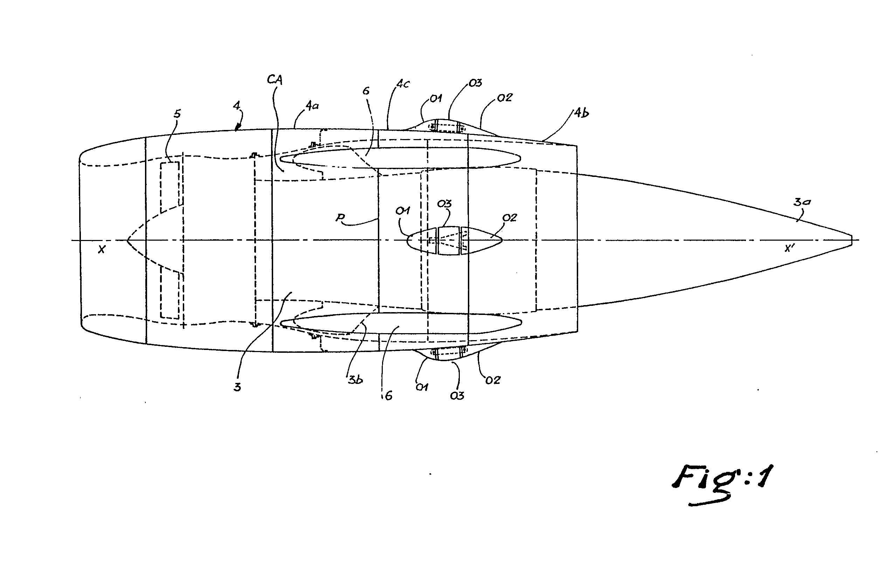

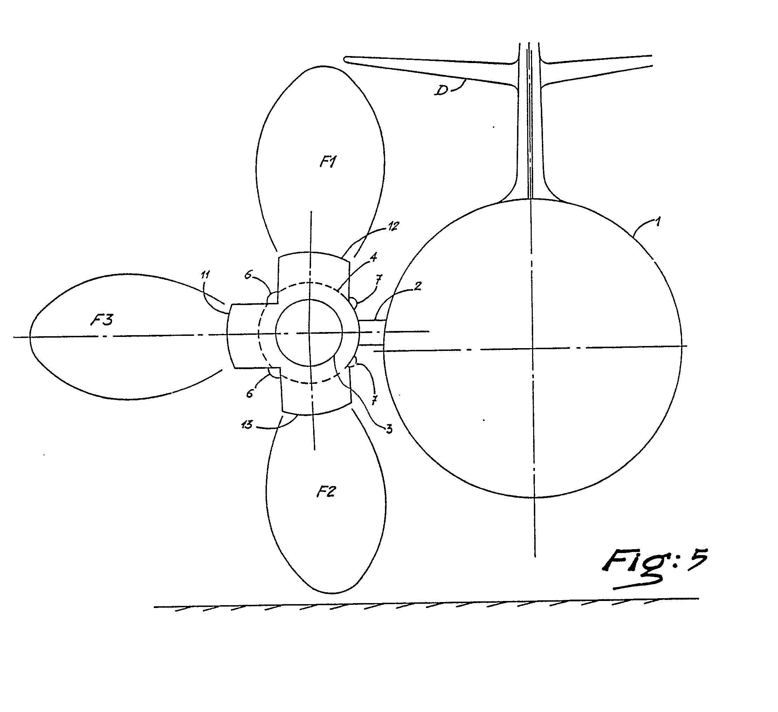

Comme on le voit à la figure 5, le moteur 3 est fixé classiquement au fuselage 1 de l'avion par un mât nacelle 2, le moteur étant entouré par un capotage tubulaire désigné de façon générale en 4. Comme représenté à la figure 1, un fan ou soufflante 5 avant est associée au réacteur qui dans l'exemple représenté est d'un type particulier dans lequel l'arrière forme un corps central 3a fermé, volumineux et de grande longueur dans lequel sont logés la turbine haute pression, la chambre de combustion et l'ensemble des équipements du moteur. Le flux primaire chaud est éjecté par des tuyères périphériques 3b s'ouvrant dans le canal annulaire CA réservé entre la paroi externe du moteur 3 et le capotage 4 et qui sert également à l'écoulement du flux secondaire provenant du fan.

Selon l'invention, le capotage 4 est constitué de trois sections, à savoir une section fixe amont 4a qui entoure le fan et l'avant du moteur, une section aval 4b, ou virole, qui est mobile en translation axiale et une section intermédiaire 4c constituée de portes basculantes formant le mécanisme déflecteur.

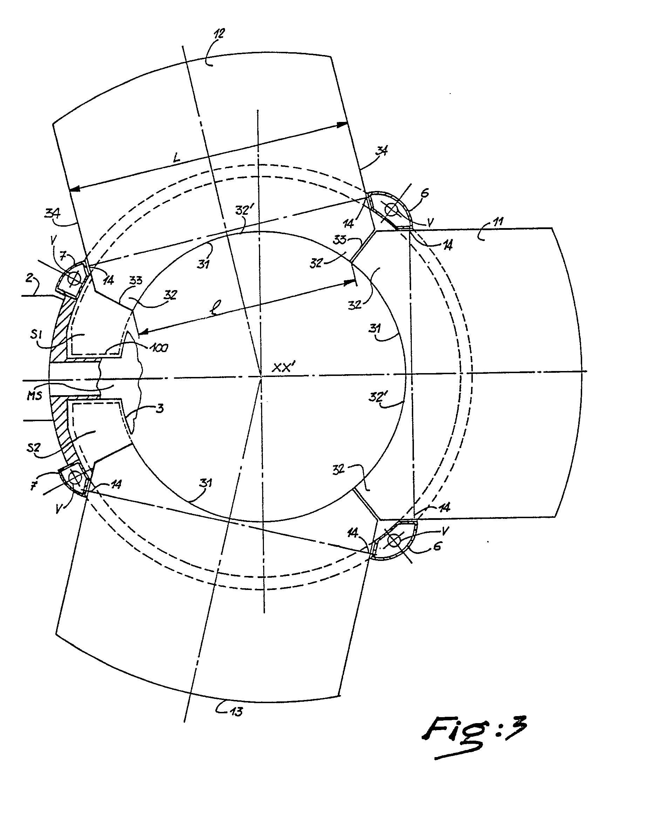

Sur la paroi externe de la section fixe 4a sont prévues quatre poutres fixes 6 et 7 s'étendant parallèlement à l'axe du moteur et au-delà du plan P délimitant les sections 4a et 4c. Les deux poutres 7 (voir figure 3) sont situées de part et d'autre du mât nacelle 2, tandis que les deux poutres 6 sont distribuées à l'opposé.

Dans chacune des poutres est logé un vérin V dont l'extrémité libre de la tige 8 est articulée en 9 sur la structure frontale 10 de la virole mobile 4b, le mouvement des vérins assurant le déplacement de la virole selon l'axe longitudinal X—X' du moteur.

En section transversale, ladite virole 4b a une section sensiblement en C, ses bords libres étant engagés dans des glissières longitudinales (non représentées) ménagées dans la structure fixe du mât nacelle et permettant le guidage de la virole lors de son déplacement.

Entre les quatre poutres 6—7 sont montées trois portes 11—12 et 13 qui, dans l'exemple représenté ont une forme générale en portion de tronc de cône. Chaque porte 11—12 et 13 est articulée par deux pivots latéraux 14 sur deux poutres voisines, la porte 11 étant articulée entre les deux poutres 6 et les portes 12 et 13 respectivement entre une poutre 7 et une poutre 6 (voir figure 3). Les deux pivots de chaque porte sont alignés sur un même axe géométrique et tous les axes géométriques d'articulation des portes sont situés dans un même plan normal à l'axe X—X'' du moteur.

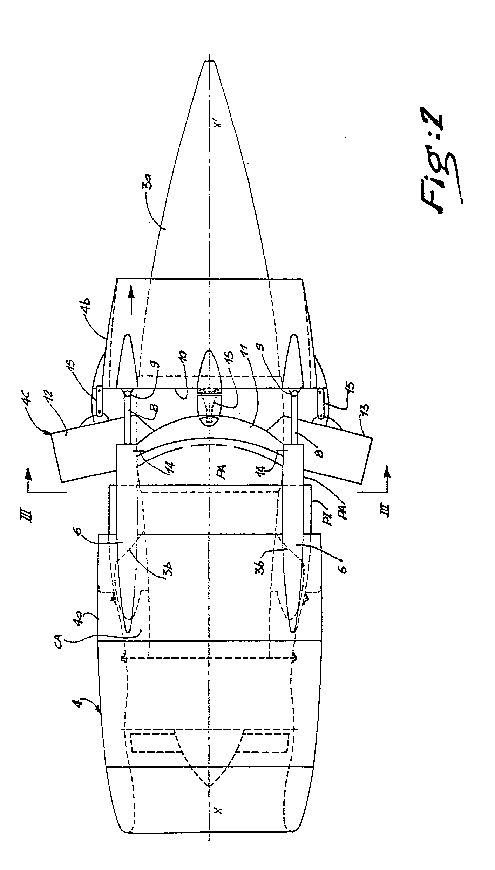

On notera, comme on le voit particulièrement à la figure 2, que les pivots 14 se trouvent au voisinage immédiat de l'extrémité arrière des poutres 6—7.

Chaque porte est attelée par ailleurs à la virole mobile 4b par une bielle 15 disposée dans un plan radial du moteur et dans la zone médiane de la porte. Cette bielle 15 est articulée en 16 dans des oreilles 23 solidaires de la face externe de la porte et en 17 sur des oreilles 35 prévues sur la structure frontale du bord 10 avant de la virole. L'axe d'articulation 16 de la bielle est situé entre le bord amont de la porte et les pivots d'articulation 14 de la porte aux poutres support. Dans l'exemple représenté, les bielles 15 étant en saillie vers l'extérieur, on peut prévoir, pour des raisons aérodynamiques, de les recouvrir d'un carénage formé de coquilles 01, 02 et 03, la coquille 01 étant fixée sur la porte, la coquille 03 sur la bielle et la coquille 02 sur la virole 4b, Les coquilles sont libres l'une par rapport à l'autre pour permettre leur déplacement relatif lors du mouvement des portes et de la virole.

La porte comporte une paroi extérieure 20 galbée dans la partie arrière de laquelle sont fixés des cadres transversaux en tôle pliée 22 et 24 en forme de U qui assurent la rigidité au niveau du bord arrière de porte.

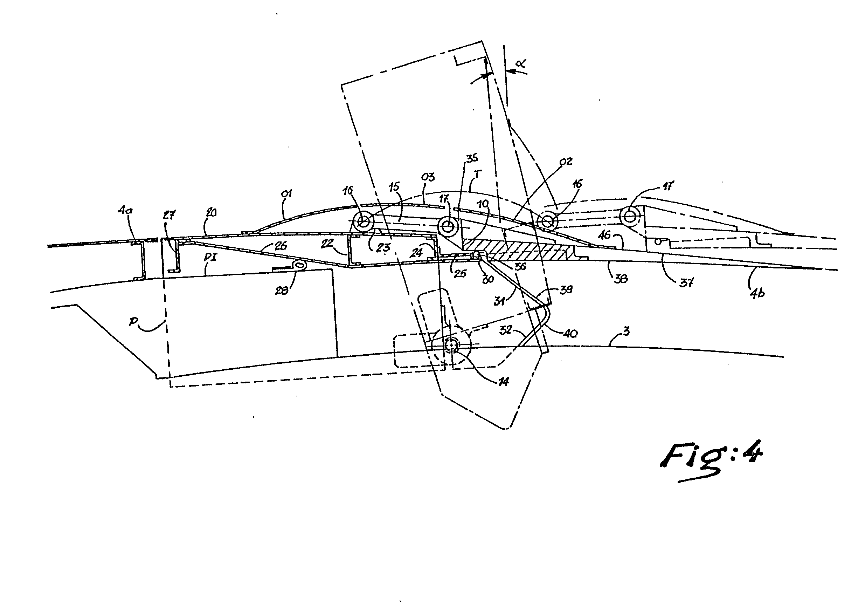

Sur le cadre arrière 24 est fixée également une ferrure 25 qui, en position de porte escamotée (figure 4), se trouve sous l'articulation 17 de la bielle à la virole 4b et vient écraser un joint d'étanchéité 36 fixé sur la face frontale 10 de la virole, ce joint 36 assurant l'étanchéité de l'arrière de la porte.

A l'intérieur des cadres 22 et 24 est fixée une paroi interne 26 dont l'extrémité arrière couvre la ferrure 25 à laquelle elle est fixée en 30. La paroi interne 26 est fixée, à l'avant de la porte, contre la paroi externe 20 par l'intermédiaire d'un cadre avant 27 faisant saillie vers l'intérieur de la porte et constituant un becquet assurant une déflection supplémentaire du flux dévié lorsque la porte est ouverte. L'étanchéité de l'avant de la porte en position escamotée est réalisée grâce à un joint d'étanchéité 28 fixé à l'avant d'une paroi interne PI solidaire de la section fixe 4a et la prolongeant vers l'aval, le joint 28 étant écrasé par la paroi interne 26 de la porte lorsque celle-ci est escamotée. La position du joint 28 empêche toute fuite du flux vers l'avant des portes lorsqu'elles sont escamotées.

Comme on le voit sur la figure 4, l'agencement de la porte est de préférence tel qu'en position escamotée, le plan des pivots 14 d'articulation des portes aux poutres se trouve situé entre les axes 16 et 17 d'articulation des bielles à la porte et à la virole. Par ailleurs, le point d'articulation 16 de la bielle à la porte est situé à une distance du bord aval de la porte telle que, lorsque la porte est en position d'inversion de poussée représentée en trait interrompu à la figure 4, le point d'articulation 16 se trouve sensiblement à la meme distance de l'axe du moteur que le point d'articulation 17 de la bielle à la virole 4b. On a figuré en T la trajectoire de l'axe 16 et on constate que cette trajectoire s'écarte très peu de la génératrice du capotage, ce qui signifie que les bielles 15 se trouveront toujours, au cours du fonctionnement, dans une position presque horizontale.

Comme on l'a déjà indiqué, chacune des portes s'étend de part et d'autre de la zone d'articulation 14 aux poutres. On décrira à présent plus particulièrement la partie arrière des portes qui doit assurer l'obturation du canal annulaire entre moteur et capotage lors de l'inversion de poussée.

En vue en plan (voir figure 3), la partie arrière de la porte présente sensiblement une forme en croissant avec une arête d'extrémité 31 curviligne épousant la forme d'une fraction de la paroi externe du moteur.

Cette partie arrière comporte, au voisinage des pivots d'articulation 14, deux cornes latérales 32 s'étendant vers l'arrière en position de porte escamotée, et une partie médiane rétrécie 32'. La distance "1" mesurée entre les cornes latérales est inférieure à la largeur L de la porte, lesdites cornes étant reliées aux bords latéraux 34 parallèles de la porte par des parties 33 convergeant vers l'axe de la porte. Comme on le voit à la figure 3, en position de portes ouvertes, les parties 33 des portes adjacentes viennent en regard l'une de l'autre sous les poutres 6 afin de réaliser une obturation optimale du canal annulaire. Avec la forme décrite ci-dessus pour les portes 12 et 13, en position des portes ouvertes, des espaces non obturés $S_1$ et $S_2$ demeurent de part et d'autre du mât de servitude moteur MS reliant le moteur 3 au mât 2. Dans certaines circonstances, il peut être nécessaire de conserver de tels espaces $S_1$ et $S_2$ du canal CA non obturés. Toutefois, si l'obturation aussi complète que possible du canal était désirée, on pourrait, en variante, fixer à la corne 32 des portes 12 et 13 la plus voisine du mât MS, une palette de prolongement que l'on a schématisée en trait interrompu en 100, cette palette s'étendant jusqu'au voisinage immédiat du mât de servitude MS. On décrira également rapidement la structure de la virole 4b. Celle-ci comporte une paroi externe 37 et une paroi interne 39 liées l'une à l'autre à l'avant par une poutre frontale qui constitue le bord 10.

L'arête avant de la paroi 38 est découpée pour présenter une configuration correspondant à la configuration des arêtes arrière curvilignes 31—32 des portes. A cet égard, au niveau de chaque porte, l'arête de la paroi 38 présente une forme dentelée 39—40 dans laquelle vient s'emboîter l'arrière de la porte en position de porte escamotée représentée à la figure 3. Cet emboîtement des formes complémentaires des arêtes 31—32 et 39—40 coopère au maintien des portes en position fermée.

Le fonctionnement de l'inverseur est très simple. En vol normal, les vérins d'actionnement de la virole sont rentrés et la virole occupe la position en trait continu des figures 1 et 4. Les trois portes sont rabatues en position escamotée et la paroi interne continue du capotage est constituée par une paroi interne PI prolongeant la section fixe 4a au-delà du plan de jonction entre 4a et 4c, par la paroi 26 des portes et par la paroi 38 de la virole.

Pour déployer l'inverseur, on actionne les vérins de virole qui repoussent celle-ci vers l'arrière. Les bielles 15 provoquent alors le basculement des portes et leur ouverture, dans la position indiquée en trait interrompu, c'est-à-dire avec une inclinaison "α" vers l'amont par rapport à un plan vertical. Des passages PA de forme sensiblement rectangulaire (figure 2) sont alors ménagés entre les portes et le bord du prolongement Pl, passages par lesquels les flux primaire et secondaire sont dérivés vers l'extérieur et vers l'amont.

Ainsi qu'on peut le voir particulièrement à la figure 5, les trois portes de l'inverseur font éclater le flux en trois nappes $F_1$, $F_2$ et $F_3$. Etant donné que le tiers du flux est rejeté par la porte 11 latéralement vers l'extérieur, l'importance de la nappe $F_1$ (déviée vers le haut au voisinage des structures directionnelles D de l'appareil situées à l'arrière) ainsi que l'importance de la nappe $F_2$ (déviée vers le sol et susceptible de créer des interactions défavorables entre le sol et le fuselage 1) se trouvent réduites d'autant, ce qui diminue sensiblement les inconvénients liés à la disposition des nappes $F_1$ et $F_2$.

**Revendications**

1. Inverseur de poussée pour moteur à réaction à capotage extérieur (4) entourant une structure de moteur (3) et délimitant avec celle-ci un canal annulaire (CA) pour l'écoulement d'un flux gazeux depuis une région amont vers une région aval, l'inversion de poussée étant produite par des portes (11—13) susceptibles de basculer d'une position inactive à une position inclinée d'inversion de poussée dans laquelle elles s'étendent transversalement au canal annulaire qu'elles obturent, tout en libérant un passage (PA) dans le capotage, permettant au flux d'être dévié radialement vers l'extérieur du canal annulaire (CA) et vers l'amont, ces portes (11—13) étant attelées par des bielles extérieures (15) à une section aval (4b) de capotage qui est susceptible de se déplacer, sous l'action d'organes de commande (V), axialement par rapport à la structure du moteur, caractérisé en ce que: lesdites portes (11—12—13) constituent des éléments d'une section intermédiaire (4c) du capotage (4) située entre une section fixe amont (4a) et la section aval mobile (4b) de celui-ci, et, en position inactive, se trouvent dans l'alignement de ces sections amont (4a) et aval (4b); en ce que ces portes (11—12—13) sont montées pivotantes chacune sur un axe fixe (14) solidaire de la section fixe amont (4a); et en ce que lesdits organes de commande (V) s'étendent directement entre ladite section fixe amont (4a) et la section mobile aval (4b), latéralement par rapport auxdites portes (11—12—13), de sorte, d'une part que leur actionnement provoque un recul de ladite section mobile (4b) et, consécutivement, un basculement des portes en position d'inversion de poussée, seulement par l'intermédiaire d'une traction exercée par ladite section mobile (4b) sur lesdites bielles (15), et d'autre part qu'ils se trouvent en dehors du flux d'inversion de poussée.

2. Inverseur de poussée selon la revendication 1, caractérisé en ce que chaque porte s'étend de part et d'autre de son articulation (14) à des poutres (6, 7) solidaires de la section amont (4a) et recevant lesdits organes de commande (V).

3. Inverseur de poussée selon la revendication 1 ou 2, caractérisé en ce que chaque bielle (15) est articulée d'une part au bord (10) amont de la section mobile aval (4b) et d'autre part à la porte (11—12—13) correspondante en une zone située entre le bord amont de la porte et la zone d'articulation (14) de la porte à la structure solidaire de la section amont (4a).

4. Inverseur de poussée selon la revendication 3, caractérisé en ce que le point d'articulation (16) de la bielle (15) à la porte (11—13) est situé à une distance du bord aval de la porte telle que, lorsque la porte est en position d'inversion de poussée, ledit point d'articulation (16) se trouve sensiblement à la même distance de l'axe (x, x') du moteur que le point d'articulation (17) de la bielle (15) sur la section mobile aval (4b).

5. Inverseur de poussée selon l'une quelconque des revendications 2 à 4, caractérisé en ce que chaque porte (11—13) est située entre deux poutres voisines (6, 7) et est articulée à chacune de ces poutres par un pivot d'articulation (14) fixe.

6. Inverseur de poussée selon la revendication 5, caractérisé en ce que chaque porte (11—13) est attelée à la section mobile aval (4b) par une seule bielle (15) située entre les pivots d'articulation (14) de la porte.

7. Inverseur de poussée selon l'une quelconque des revendications précédentes adapté à un moteur d'avion en configuration "nacelle latérale" dans laquelle le moteur (3) est fixé par un mât (2) à la structure porteuse, caractérisé en ce que ledit inverseur comporte trois portes (11—13) dont l'une est à peu près diamétralement opposée au mât (2) et les deux autres sont situées à peu près symétriquement par rapport à un plan horizontal passant par l'axe du moteur.

8. Inverseur de poussée selon la revendication 7, caractérisé en ce que les portes (11—13) sont de forme générale rectangulaire et galbée.

9. Inverseur de poussée selon la revendication 7, caractérisé en ce que les portes (11—13) sont portées par quatre poutres (6, 7), deux de ces poutres étant situées respectivement au voisinage du mât (2) et les deux autres étant disposées respectivement entre deux portes adjacentes.

10. Inverseur de poussée selon la revendication 9, caractérisé en ce que chaque poutre (6, 7) forme une partie de la paroi du capotage.

11. Inverseur de poussée selon les revendications 2 et 7, caractérisé en ce que la partie arrière de la porte s'étendant entre l'articulation (16) et la section mobile aval (4b) présente, en plan, une configuration concave, avec, au voisinage des pivots d'articulation (14) de la porte, deux cornes latérales (32) s'étendant vers l'arrière et une partie médiane rétrécie (32'), l'arête arrière curviligne (31) de la porte épousant en position d'inversion la forme de la structure centrale du moteur.

12. Inverseur de poussée selon la revendication 11, caractérisé en ce que la distance (1) mesurée entre les cornes latérales (32) est inférieure à la largeur (L) de la porte, les cornes (32) étant reliées respectivement au bord latéral (34) correspondant de la porte par des parties (33) convergeant vers l'arrière et vers l'axe de la porte.

13. Inverseur de poussée selon la revendication 11, caractérisé en ce que l'arête avant de la section mobile aval (4b) présente une configuration correspondant à la configuration des arêtes arrière curvilignes (31) des portes, de telle sorte qu'en position de portes inactives, lesdites arêtes arrière (31) des portes s'emboîtent dans l'arête avant (39—40) de la section mobile en coopérant ainsi au maintien des portes en position fermée.

14. Inverseur de poussée selon l'une quelconque des revendications 7 à 13, caractérisé en ce que la section mobile aval (4b) présente une forme en C et coulisse sur des rails longitudinaux appartenant à la structure fixe de l'avion.

15. Moteur à corps central et capotage extérieur dans lequel sont produits un écoulement de flux primaire (chaud) et un écoulement de flux secondaire (froid) grâce à une soufflante (fan 5) qui sont éjectés par un canal annulaire unique réservé entre le corps central (3) et le capotage (4), caractérisé en ce qu'il est équipé d'un inverseur de poussée selon l'une quelconque des revendications 1 à 14, assurant ainsi pratiquement la dérivation de la totalité des écoulements créés par le moteur (3) et la soufflante (5).

**Patentansprüche**

1. Schubumkehrvorrichtung für ein Strahltriebwerk mit einer äußeren Ummantelung (4), die die Triebwerkskonstruktion (3) umgibt und zusammen mit dieser einen ringförmigen Kanal (CA) begrenzt, in welchem ein Gasstrom von einer eingangsseitigen Region zu einer ausgangsseitigen Region strömt, mit Toren (11, 12, 13) zur Schubumkehr, die von einer inaktiven Position in eine geneigte Schubumkehrposition schwenkbar sind, in der sie quer zu dem ringförmigen Kanal verlaufen und diesen abschließen, wobei sie einen Durchgang (PA) in der Ummantelung (4) freigeben, durch den der Gasstrom von dem ringförmigen Kanal (CA) radial nach außen und in Richtung auf die Eingangsseite umlenkbar ist, wobei diese Tore (11, 12, 13) durch äußere Triebstangen (15) mit einem ausgangsseitigen Abschnitt (44b) der Ummantelung (4) gekuppelt sind, der (4b) unter der Wirkung von Steuerorganen (V) relativ zu der Triebwerkskonstruktion (3) axial verschiebbar ist, dadurch gekennzeichnet, daß die genannten Tore (11, 12, 13) Elemente eines zwischen einem festen eingangsseitigen Abschnitt (4a) und dem genannten beweglichen ausgangsseitigen Abschnitt (4b) liegenden mittleren Abschnitts (4c) der Ummantelung (4) bilden, die in der genannten inaktiven Position mit dem eingangsseitigen Abschnitt (4a) und dem ausgangsseitigen Abschnitt (4b) fluchten, daß diese Tore (11, 12, 13) jeweils auf einer mit dem festen eingangsseitigen Abschnitt (4a) verbundenen festen Achse (14) schwenkbar montiert sind, und daß die genannten Steuerorgane (V) sich direkt zwischen dem festen eingangsseitigen Abschnitt (4a) und dem beweglichen ausgangsseitigen Abschnitt (4b) seitlich der Tore (11, 12, 13) erstrecken, derart daß einerseits ihre Betätigung ein Zurückfahren des beweglichen ausgangsseitigen Abschnitts (4b) und infolgedessen ein Verschwenken der Tore in die Schubumkehrposition lediglich durch den von dem beweglichen Abschnitt (4b) auf die Triebstangen (15) ausgeübten Zug bewirkt, und sie sich andererseits außerhalb der Schubumkehrströmung befinden.

2. Schubumkehrvorrichtung nach Anspruch 1, dadurch gekennzeichnet, daß jedes Tor (11, 12, 13) sich beidseitig seiner Schwenkachse (14) bis zu Trägerelementen (6, 7) erstreckt, die mit dem eingangsseitigen Abschnitt (4a) der Ummantelung (4) fest verbunden sind und in denen die genannten Steuerorgane (V) aufgenommen sind.

3. Schubumkehrvorrichtung nach Anspruch 1 oder 2, dadurch gekennzeichnet, daß jede Triebstange (15) einerseits an dem der Eingangsseite zugewandten Rand (10) des beweglichen ausgangsseitigen Abschnitts (4b) der Ummantelung (4) und andererseits an dem zugeordneten Tor (11, 12, 13) in einer Zone angelenkt ist, die zwischen dem der Eingangsseite zugewandten Rand des Tores und der Zone liegt, in der das Tor mit der festen Konstruktion des eingangsseitigen Abschnitts (4a) der Ummantelung (4) schwenkbar verbunden ist.

4. Schubumkehrvorrichtung nach Anspruch 3, dadurch gekennzeichnet, daß der Punkt (16), in welchem die Triebstange (15) an dem Tor (11, 12, 13) angelenkt ist, sich in einer solchen Entfernung von dem der Eingangsseite zugewandten Rand des Tors befindet, daß er (16) annähernd gleichen Abstand von der Achse (x, x') des Triebwerks hat wie der Anlenkungspunkt (17) der Triebstange (15) auf dem beweglichen ausgangsseitigen Abschnitt (4d) der Ummantelung (4), wenn das Tor sich in der Schubumkehrposition befindet.

5. Schubumkehrvorrichtung nach einem der Ansprüche 2 bis 4, dadurch gekennzeichnet, daß jedes Tor (11, 12, 13) zwischen jeweils zwei benachbarten Trägerelementen (6, 7) liegt und an jeder von ihnen über einen festen Gelenkzapfen (14) angelenkt ist.

6. Schubumkehrvorrichtung nach Anspruch 5, dadurch gekennzeichnet, daß jedes Tor (11, 12, 13) mit dem beweglichen ausgangsseitigen Abschnitt (4b) über eine einzige Triebstange (15) gekuppelt ist, die zwischen den Gelenkzapfen (14) des Tors liegt.

7. Schubumkehrvorrichtung nach einem der vorhergehenden Ansprüche für ein Flugzeugtriebwerk, das in einer seitlichen Triebwerksgondel angeordnet und über eine Strebe (2) an der Tragkonstruktion befestigt ist, dadurch gekennzeichnet, daß die Schubumkehrvorrichtung drei Tore (11, 12, 13) aufweist, von denen eines der genannten Strebe annähernd diametral gegenüberliegt, und die beiden anderen annähernd symmetrisch zu einer durch die Triebwerkachse verlaufenden horizontalen Ebene angeordnet sind.

8. Schubumkehrvorrichtung nach Anspruch 7, dadurch gekennzeichnet, daß die Tore (11, 12, 13) im wesentlichen die Form eines abgerundeten Rechtecks besitzen.

9. Schubumkehrvorrichtung nach Anspruch 7, dadurch gekennzeichnet, daß die Tore (11, 12, 13) von vier Trägerelementen (6, 7) getragen sind, wobei zwei dieser Trägerelemente (6, 7) in der Nähe der Strebe (2) liegen und die anderen zwischen zwei benachbarten Toren angeordnet sind.

10. Schubumkehrvorrichtung nach Anspruch 9, dadurch gekennzeichnet, daß jedes Trägerelement (6, 7) einen Wandungsteil der Ummantelung (4) bildet.

11. Schubumkehrvorrichtung nach den Ansprüchen 2 und 7, dadurch gekennzeichnet, daß der zwischen dem Anlenkungspunkt (16) und dem ausgangsseitigen beweglichen Abschnitt (4b) der Ummantelung (4) liegende hintere Teil des Tors einen konkaven Grundriß besitzt, der in der Nähe der Gelenkzapfen (14) des Tors zwei sich nach hinten erstreckende seitliche Zipfel (32) und einen zurückgenommenen mittleren Bereich aufweist, wobei die gekrümmte hintere Abschlußkante (31) des Tors sich in der Schubumkehrposition an die Form der zentralen Triebwerkskonstruktion anschmiegt.

12. Schubumkehrvorrichtung nach Anspruch 11, dadurch gekennzeichnet, daß der Abstand (1) zwischen den seitlichen Zipfeln (32) kleiner ist als die Breite (L) des Tors und daß die Zipfel (32) mit dem zugeordneten seitlichen Rand (34) des Tors über nach hinten und in Richtung auf die Achse des Tors konvergierende Kanten (33) verbunden sind.

13. Schubumkehrvorrichtung nach Anspruch 11, dadurch gekennzeichnet, daß die vordere Abschlußkante des beweglichen ausgangsseitigen Abschnitts (4b) der Ummantelung (4) eine Form besitzt, die der Form der gekrümmten hinteren Abschlußkante (31) der Tore entspricht, derart daß die hinteren Abschlußkanten (31) der Tore sich bei inaktiver Position der Tore in die vordere Abschlußkante (39, 40) der beweglichen Abschnitts (4b) einfügen und so zum Halten der Tore in Schließposition beitragen.

14. Schubumkehrvorrichtung nach einem der Ansprüche 7 bis 13, dadurch gekennzeichnet, daß der bewegliche ausgangsseitige Abschnitt (4b) der Ummantelung (4) C-förmig ausgebildet ist und auf Längsschienen gleitet, die Bestandteil festen Konstruktion des Flugzeugs sind.

15. Triebwerk mit einem zentralen Körper (3) und einer äußeren Ummantelung (4), in denen ein (heißer) Primärstrom und mit Hilfe eines Gebläses (5) ein (kalter) Sekundärstrom erzeugt werden, die durch einen einzigen zwischen dem zentralen Körper (3) und der Ummantelung (4) vorgesehenen ringförmigen Kanal geführt sind, dadurch gekennzeichnet, daß eine Schubumkehrvorrichtung nach einem der Ansprüche 1 bis 14 vorgesehen ist, so daß die Umlenkung praktisch der gesamten von dem Triebwerk (3) und dem Gebläse (5) erzeugten Ströme sichergestellt ist.

**Claims**

1. A thrust reverser for an aircraft jet engine having an external cowling (4) surrounding an engine structure (3) and defining therewith an annular duct (CA) for the flow of a gas from an upstream region to a downstream region, the thrust reversal being produced by doors (11—13) adapted to swing from an inoperative position to an inclined thrust reversal position in which they extend transversely of the annular duct that they shut off while freeing a passage (PA) in the cowling enabling the flow of gas to be deflected radially towards the exterior of the annular duct (CA) and upstream, said doors (11—13) being linked by external links (15) to a downstream cowling section (4b) adapted to move axially with respect to the engine structure in response to control means (V). characterised in that the said doors (11—12—13) form parts of an intermediate section (4c) of the cowling (4) situated between an upstream fixed section (4a) and the movable downstream section (4b) thereof and, in the inoperative position, are situated in alignment with said upstream and downstream sections (4a, 4b); in that said doors (11—12—13) are mounted pivotally each on a fixed spindle (14) connected to the upstream fixed section (4a); and in that said control means (V) extend directly between said upstream fixed section (4a) and the downstream movable section (4b) laterally with respect to said doors (11—12—13) so that, on the one hand, their actuation causes withdrawal of the said movable section (4b) followed by swinging of the doors into the thrust reversal position simply by traction exerted by said movable section (4b) on said links (15) and, on the other hand, they are situated outside the thrust reversal flow.

2. A thrust reverser according to claim 1, characterised in that each door extends on either side of its articulation (14) to members (6, 7) secured to the upstream section (4a) and receiving said control means (V).

3. A thrust reverser according to claim 1 or 2, characterised in that each link (15) is articulated, on the one hand, to the upstream edge (10) of the downstream movable section (4b) and, on the other hand, to the corresponding door (11—12—13) in a zone situated between the upstream edge of the door and the zone of articulation (14) of the door to the structure connected to the upstream section (4a).

4. A thrust reverser according to claim 3, characterised in that the point of articulation (16) of the link (15) to the door (11—13) is situated at a distance from the downstream edge of the door such that, when the door is in the thrust reversal position, said point of articulation (16) is substantially at the same distance from the engine axis (x, x') as the point of articulation (17) of the link (15) on the downstream movable section (4b).

5. A thrust reverser according to any one of claims 2 to 4, characterised in that each door (11—13) is situated between two adjacent members (6, 7) and is articulated to each of said members by a fixed articulation pivot (14).

6. A thrust reverser according to claim 5, characterised in that each door (11—13) is linked to the downstream movable section (4b) by a single link (15) situated between the door articulation pivots (14).

7. A thrust reverser according to any one of the preceding claims, adapted to a "lateral nacelle" configuration aircraft engine in which the engine (3) is fixed by a strut (2) to the bearing structure, characterised in that the said reverser comprises three doors (11—13), one of which is substantially diametrically opposite the strut (2) while the other two are situated substantially symmetrically with respect to a horizontal plane passing through the engine axis.

8. A thrust reverser according to claim 7, characterised in that the doors (11—13) are of general rectangular and curved shape.

9. A thrust reverser according to claim 7, characterised in that the doors (11—13) are borne by four members (6, 7), two of these members being situated respectively near the strut (2) and the other two being disposed respectively between two adjacent doors.

10. A thrust reverser according to claim 9, characterised in that each member (6, 7) forms part of the cowling wall.

11. A thrust reverser according to claims 2 and 7, characterised in that the rear part of the door extending between the articulation (16) and the downstream movable section (4b) has in plan view a concave configuration with, near the door articulation pivots (14), two lateral cusps (32) extending rearwardly and a narrowed middle part (32'), the curved rear edge (31) of the door matching the shape of the central engine structure when in the reversal position.

12. A thrust reverser according to claim 11, characterised in that the distance (1) measured between the lateral cusps (32) is less than the width (L) of the door, the cusps (32) being connected respectively to the corresponding side edge (34) of the door by parts (33) which converge rearwardly and towards the door axis.

13. A thrust reverser according to claim 11, characterised in that the front edge of the downstream movable section (4b) has a configuration corresponding to the configuration of the curved rear edges (31) of the doors so that in the inoperative door position the said rear edges (31) of the doors fit in the front edge (39—40) of the movable section, thus co-operating in holding the doors in the closed position.

14. A thrust reverser according to any one of claims 7 to 13, characterised in that the downstream movable section (4b) is of C-shape and slides on longitudinal rails belonging to the fixed aircraft structure.

15. An engine having a central body and external cowling in which a primary (hot) flow and a secondary (cold) flow are produced by a fan (5) and are ejected through a single annular duct formed between the central body (3) and the cowling (4), characterised in that it is equipped with a thrust reverser according to any one of claims 1 to 14, thus practically deflecting all the flows produced by the engine (3) and the fan (5).

*Fig:1*

0 043 764

Fig:2

Fig:3

Fig:4

0 043 764

Fig: 5